Europäisches Patentamt

European Patent Office

Office européen des brevets

(11) Publication number: **0 423 871 A1**

# EUROPEAN PATENT APPLICATION

(21) Application number: 90202685.5

(22) Date of filing: 10.10.90

(51) Int. Cl.5: **B01D 63/08**

(30) Priority: 16.10.89 NL 8902565

(43) Date of publication of application:
24.04.91 Bulletin 91/17

(84) Designated Contracting States:
BE CH DE DK FR GB LI NL

(71) Applicant: AMAFILTER BV
Kwakelkade 28
NL-1823 CL Alkmaar(NL)

(72) Inventor: Kohlheb, Robert, Dr.
Kwakelkade 28
Alkmaar(NL)
Inventor: Dosoudil, Martin, Dr.-Ing.
Kwakelkade 28
Alkmaar(NL)

(74) Representative: Koomen, Jan, Ir.
Kennemerstraatweg 35
NL-1814 GB Alkmaar(NL)

(54) Apparatus for diaphragm filtration.

(57) The apparatus is provided with at least one disc shaped supporting plate [2a,2b], in which at least on one side a channel [4a,4b] is arranged, which is connected to a feed [7a,7b] and a discharge [8a,8b] which preferably are arranged diametrically opposite each other at the periphery of the supporting plate [2a,2b], while over the channel a diaphragm [5] is applied which is supported by a permeable layer [6] onto a further supporting plate, which has been clamped against the first supporting plate and which closes off the space taken in by the permeable layer [6] and which space is connected to a filtrate discharge [13,14].

FIG 2

## APPARATUS FOR DIAPHRAGM FILTRATION.

The invention relates to an apparatus for diaphragm filtration.

Diaphragm filtration is well known. However the use of this diaphragm filtration has so far been limited to laboratory use for scientific purposes.

The invention aims to provide an apparatus for diaphragm filtration, by which the diaphragm filtration will be more suitable for use in the industrial field.

The apparatus for diaphragm filtration according to the invention is characterized in that it comprises at least one disc-shaped supporting plate, in which at least at one side at least one channel is applied and which is connected to a feed and discharge, preferably arranged diametrically opposite each other at the periphery of the supporting plate, while a diaphragm is applied over the channel and supported by a permeable layer, and more in particular a supporting gauze, by a further supporting plate, which is clamped onto the first supporting plate, and which closes off the space taken in by the permeable layer and which space is connected to a filtrate discharge.

To obtain a good mixture of the medium to be filtered in the channel, the channel is according to a feature of the invention, meandrically-shaped.

The obviation of the negative effects of the centrifugal powers on the medium to be filtered, is largely due to the meandrical shape.

In a further embodiment of the apparatus according to the invention, two or more meandrically-shaped channels, extending next to each other, are present on a side of the supporting plate.

In a further larger embodiment of the invented apparatus and which is more useful for industrial purposes, the apparatus is provided with a stack of supporting plates, clamped onto each other, and of which the inner plates are provided at both sides with channels, while between every two succeeding supporting plates a permeable layer is arranged with a diaphragm on both sides thereof, and which diaphragm adjoints a supporting plate.

In a further working-out of this embodiment, the channels are connected at a supporting plate to a joint feed and discharge, radially extending through the middle of the thickness of the supporting plate, and each being connected onto a collecting- and distributing pipe, extending along the stack.

According to another characteristic of the apparatus according to the invention, both of the outer plates of the stack of supporting plates are provided on one side with a channel.

The apparatus according to the invention may be comprised of different materials.

In a preferable embodiment of the apparatus according to the invention, the supporting plates are made of plastics and the stack of supporting plates is enclosed by a metal covering, and more in particular by a steel covering.

The building-up of the supporting plates may be various. Thus, it is possible that a supporting plate is carried out in one piece.

In a favourable embodiment according to a characteristic of the invented apparatus, a supporting plate comprises two discs, which on one side are provided with a channel and on the other side are lying next to each other with their flat sides against one another, and which discs are enclosed by a supporting ring with feed- and discharge channels.

The invention will be further explained in the following description with reference to the accompanying drawing of an embodiment by way of example.

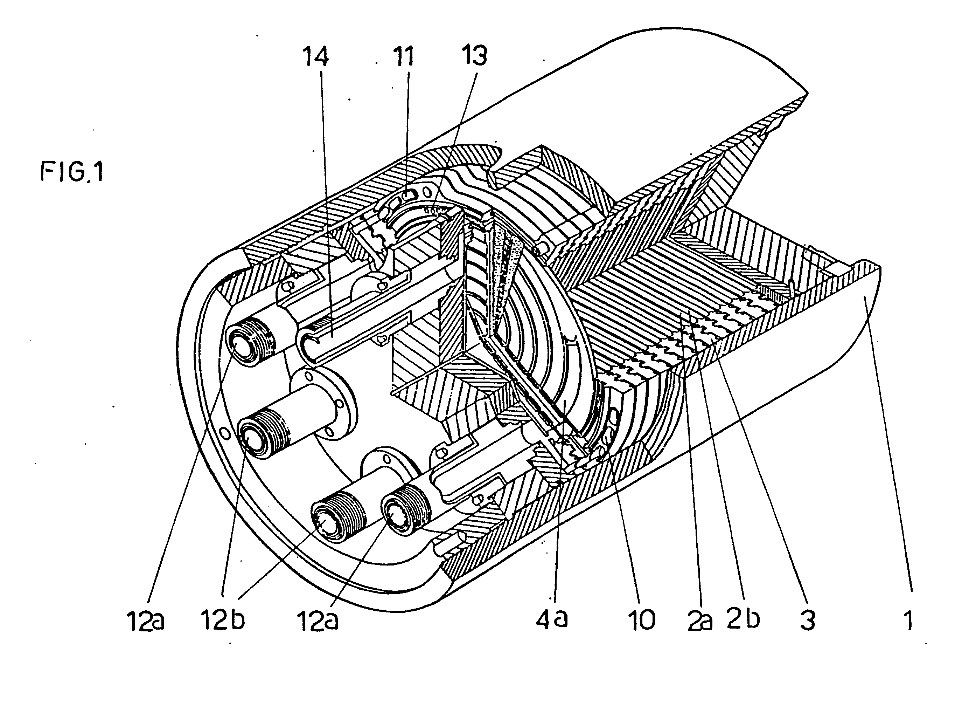

Fig. 1 is a perspective view of the apparatus according to this embodiment.

Fig. 2 is an enlarged view of a supporting plate with diaphragm and supporting gauze.

As shown in the drawing, the apparatus is provided with a steel covering 1 in which a set of supporting plates is applied, each supporting plate comprising two discs 2a and 2b, which are arranged with their flat back-sides towards one another and which are enclosed by a supporting ring 3.

On their sides which are turned away from one another, both discs 2a and 2b are provided with two meandrically-shaped channels 4a and 4b, extending next to each other, and over which a diaphragm 5, with behind it a supporting gauze 6 is arranged.

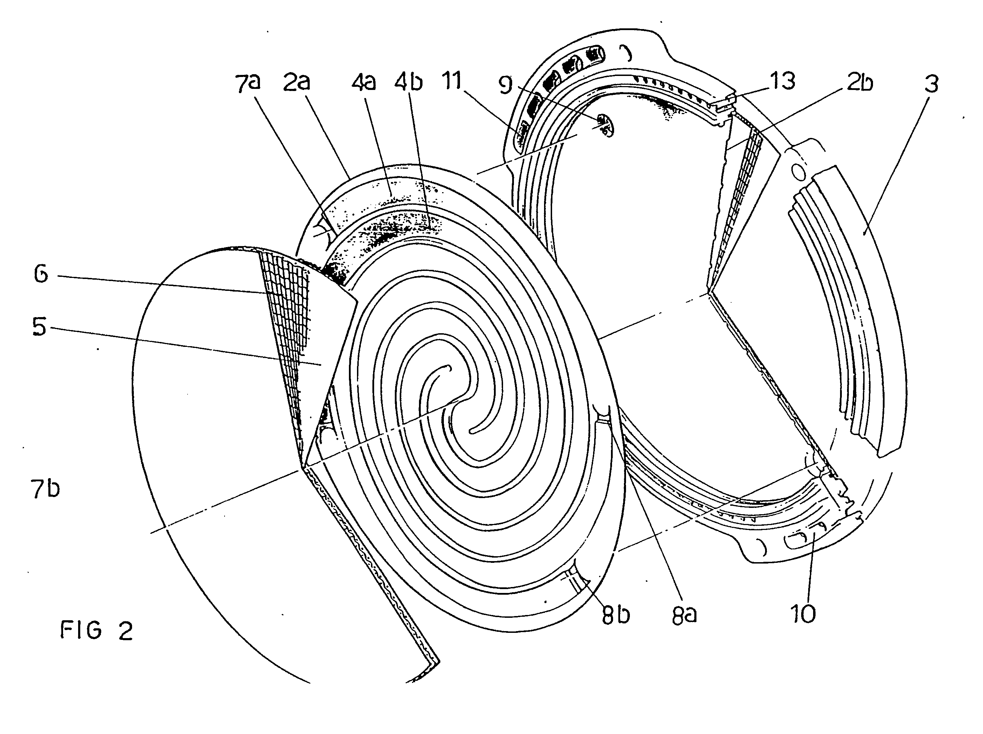

As shown in Fig. 2 the channel 7a and a discharge 8a and the channel 4b are provided with a feed 7b and a discharge 8b.

Both the matching feeds and discharges on either sides of the supporting plate connect to each other, as shown in Fig. 2 at 9, and subsequently extend radially and through the middle of the thickness of the composed supporting plate towards the supporting ring 3, to subsequently at this point, connect to the axially extending collecting pipes 10 and distributing pipes 11, which for the one group of flow-through channels 4a extend towards the connecting stubs 12a, and for the other group of channels 4b extend towards the connecting stubs 12b.

The spaces taken in by the supporting gauze 6, in which the filtrate is collected, are connected onto discharge channels 14, arranged within the supporting rings, and which discharge channels extend towards the connecting stub 14.

By connecting the various connecting stubs to each other, both groups of flow-through channels 4a and 4b may be connected with each other into parallel or into series.

Thus, by connecting to each other both the connecting stubs for the discharge of, and both the connecting stubs for the feed into both the flow-through channels 4a and 4b, these may in a simple way be connected parallel, and by connecting to each other of the discharge connecting stub of the one group of channels 4a to the feed connecting stub of the other group 4b, both the flow-through channel groups may be connected in series.

## Claims

1. Apparatus for diaphragm filtration, characterized in that it comprises at least one disc-shaped supporting plate into which at least on one side a channel is arranged, which is connected to a feed and discharge which are preferably arranged diametrically opposite each other at the periphery of the supporting plate, while over the channel a diaphragm is applied, which is supported through a permeable layer, more in particular across supporting gauze, by a second supporting plate, which is clamped onto the first supporting plate and which closes off the space taken in by the permeable layer and which space is connected to a filtrate discharge.

2. Apparatus according to claim 1, characterized in that the channel is meandrically-shaped.

3. Apparatus according to claim 2, characterized in that on one side of the supporting plate two or more, meandrically-shaped flow-through channels are arranged, extending next to each other.

4. Apparatus according to one of the preceding claims, characterized in that this is provided with a stack of supporting plates, clamped onto each other and of which the inner plates are provided on either sides with channels, while between every two succeeding supporting plates a permeable layer with a diaphragm on either side thereof, is arranged.

5. Apparatus according to claim 4, characterized in that the channels are connected at a supporting plate to a joint feed and discharge, extending radially through the middle of the thickness of the supporting plate, and each of which is connected to a collecting- and distributing pipe, extending along the length-direction of the stack.

6. Apparatus according to one of the preceding claims, characterized in that the outer plates of the stack of supporting plates are on one side provided with a channel.

7. Apparatus according to one of the preceding claims, characterized in that the supporting plates are made of plastics and the stack of supporting plates is enclosed by a metal covering.

8. Apparatus according to one of the preceding claims, characterized in that a supporting plate is comprised of two discs, which on one side are provided with a channel and on the other side are lying with their flat sides against each other, and which discs are enclosed by a supporting ring with feed and discharge channels.

FIG.1

EP 0 423 871 A1

14    11    13

12a    12b    12a    4a    10    2a 2b    3    1

7a 2a 4a 4b 11 9 13 2b 3

6

5

7b

8b 8a 10

FIG 2

EP 0 423 871 A1

European
Patent Office

**EUROPEAN SEARCH
REPORT**

Application Number

**EP 90 20 2685**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | EP-A-0 203 318   (R. KOHLHEB) <br> * Abstract; figures 1,2; claims 1,3,6-8; page 6, line 19 - page 8, line 14 * | 1,2,7 | B 01 D 63/08 |
| A | US-A-3 398 834   (F.E. NUTTALL) <br> * Figures 1-5; abstract; column 2, line 54 - column 4, line 28 * | 1,4,6 | |
| A | US-A-4 202 772   (A.L. GOLDSTEIN) <br> * Abstract; figures 1-5; column 2, line 16; column 2, line 44 - column 3, line 37; example 2 * | 1,2,4,5,8 | |
| A | DE-A-2 446 157   (GES. FÜR KERNENERGIEVERWER-TUNG) <br> * Figures 1-3; claims 1,2,4,12,15 * | 1,4,6 | |
| A | EP-A-0 139 376   (A.R. LAVENDER) <br> * Abstract; figures 4,6,11-15 * | 1,4,5 | |
| A | FR-A-2 234 022   (L. SCHLEIFFER AG) <br> * Figures 1-3; claims 1-3,6,7 * | 1,2,4,6 | TECHNICAL FIELDS SEARCHED (Int. Cl.5) |
| A | US-A-4 340 475   (M.A. KRAUS) <br> * Abstract; figures 1-3; column 2, line 34 - column 4, line 46 * | 1,4,6 | B 01 D |

The present search report has been drawn up for all claims

| Place of search | Date of completion of search | Examiner |
|---|---|---|
| The Hague | 30 November 90 | HOORNAERT P.G.R.J. |

CATEGORY OF CITED DOCUMENTS
X : particularly relevant if taken alone
Y : particularly relevant if combined with another
     document of the same category
A : technological background
O : non-written disclosure
P : intermediate document
T : theory or principle underlying the invention

E : earlier patent document, but published on, or after
     the filing date
D : document cited in the application
L : document cited for other reasons

&: member of the same patent family, corresponding
     document